# EUROPEAN PATENT APPLICATION

(11) **EP 4 641 541 A1**
(43) Date of publication of application: **29.10.2025**
(21) Application number: 23906570.9
(22) Date of filing: 21.11.2023
(51) Int. Cl.: G08G 1/16, B60W 30/08, G06T 7/00

(54) **TRAVEL ASSISTANCE DEVICE, AND TRAVEL ASSISTANCE METHOD FOR TRAVEL ASSISTANCE DEVICE**

(30) Priority: 22.12.2022 JP 2022205275
(71) Applicant: Hitachi Astemo, Ltd., Ibaraki 312-8503 (JP)
(72) Inventor: ITO, Hiroaki, Hitachinaka-shi, Ibaraki 312-8503 (JP); KISHIMOTO, Tadashi, Hitachinaka-shi, Ibaraki 312-8503 (JP); KOMATSU, Sakie, Hitachinaka-shi, Ibaraki 312-8503 (JP)
(74) Representative: Grünecker Patent- und Rechtsanwälte PartG mbB
(86) International application number: PCT/JP2023/041694
(87) International publication number: WO 2024/135201

(57) **Abstract**

A travel assistance device according to the present invention comprises: a region extraction unit (11) that extracts a specific region that includes traffic participants around a host vehicle from image information of sensor data; a risk derivation unit (15) that derives the degree of risk for safe travel of the host vehicle in relation to the traffic participants in the extracted specific region; a priority-setting unit (16) that sets the processing priority of the specific region according to the degree of risk; a processing-load-setting unit (18) that sets the processing load of information of the specific region according to the processing priority; and a recognition-processing unit (19) that performs traffic participant recognition on the basis of processing load information from the processing-load-setting unit.

## Description

### Technical Field

The present invention relates to a travel assistance device configured to assist travel of a vehicle, and a travel assistance method for a travel assistance device: in particular, relates to a travel assistance device and a travel assistance method for a travel assistance device which are suitable for a vehicle structured to perform automatic driving.

### Background Art

Recently, upgraded travel controls are desired for advanced automatic driving in expressways, driving assistance in complicated travel environments in ordinary roads, etc. This requires external environment recognition at high accuracy. The accuracy in external environment recognition can be improved by upgrading an external environment recognition sensor (e.g., employing a highresolution camera), increasing a number of external environment recognition sensors mounted, etc.

Real-time execution of processing for external environment recognition requires a computer with high computing power in image processing. However, current computers are insufficient in such computing power. This creates a need for more efficient utilization of computer resources.

As a countermeasure for this, JP 2018-568383 A (Patent Document 1) discloses setting priorities to targets of recognition processing, setting computing power corresponding to the priorities, and thereby attempting appropriate allotment of computing power and improvement of accuracy in external environment recognition.

Patent Document 1 splits a captured image to rectangular regions, and sets different resolutions to the respective regions depending on a straight-forward direction, a left-turn direction, or a right-turn direction. Specifically, in the straight-forward direction, the resolutions are set high in vicinities of center regions of the captured image and set low in the other regions. In the left-turn direction, the resolutions are set high in vicinities of left-side regions of the captured image and set low in the other regions. In the right-turn direction, the resolutions are set high in vicinities of right-side regions of the captured image and set low in the other regions.

This configuration of setting priorities in the resolutions depending on the travel direction of a vehicle allows appropriate allotment of computing power and improvement of accuracy in external environment recognition, and thereby allows effective utilization of computer resources.

### Prior Art Document(s)

### Patent Document(s)

Patent Document 1: JP 2018-56838 A

### Summary of the Invention

### Problem(s) to be Solved by the Invention

The external environment recognition disclosed in Patent Document 1 is configured to set different resolutions to the plurality of regions depending on a travel direction of a vehicle. However, this method is supposed to fail to handle a situation described below.

For example, in case of traveling straight forward, the resolutions are set high in vicinities of central regions of a captured image and are not high in regions outside the vicinities of the central regions. Thus, if another vehicle approaching the own vehicle exists in left-side regions or right-side regions, the own vehicle may contact with the another vehicle because of lowness in accuracy for recognizing the another vehicle and delay in recognition of the another vehicle approaching the own vehicle. Naturally, similar problems may be caused in case that the own vehicle travels in the left-turn direction or the right-turn direction.

Thus, it is desired to attempt early recognition of danger in safety such as contacting and appropriate allotment of computing power, and perform safe travel assistance with effective utilization of computer resources.

The present inventions intends to provide a travel assistance device and a travel assistance method for a travel assistance device which are configured to perform safe travel assistance with effective utilization of computer resources by performing early recognition of danger (i.e., security of safety) and appropriate allotment of computing power.

### Means for Solving the Problem(s)

According to an aspect of the present invention, a travel assistance device includes: an information processing section configured to process information of sensor data obtained by a sensor; and a vehicle control section configured to perform travel assistance of a vehicle with use of the information processed by the information processing section. The information processing section includes: a region extraction section configured to extract a specific region containing a traffic participant around an own vehicle, from the information of the sensor data; a risk derivation section configured to derive a risk degree of the traffic participant of the extracted specific region in view of safe travel of the own vehicle; a priority setting section configured to set a processing priority of the specific region depending on the risk degree; a processing-load setting section configured to set a processing load of information of the traffic participant of the specific region depending on the processing priority; and a recognition processing section configured to perform recognition of the traffic participant, based on information of the processing load from the processing-load setting section.

### Effect(s) of the Invention

The above aspect of the present invention serves to perform early recognition of danger (i.e., security of safety) and appropriate allotment of computing power, and thereby serves to perform safe travel assistance with effective utilization of computer resources.

### Brief Description of the Drawings

FIG. 1 is a configuration view of a travel assistance device according to a first embodiment of the present invention.
FIG. 2 is a flow chart illustrating a control flow for setting processing priorities in the travel assistance device shown in FIG. 1.
FIG. 3 is a vehicle forward image captured by a camera, and is an illustrative view showing examples of traffic participants.
FIG. 4 is an illustrative view showing examples of specific regions containing the traffic participants in the image shown in FIG. 3.
FIG. 5 is a flow chart illustrating a control flow for determining a collision risk of the traffic participant in the specific region shown in FIG. 4.
FIG. 6A is an illustrative view showing a first example of collision risk.
FIG. 6B is an illustrative view showing a second example of collision risk.
FIG. 6C is an illustrative view showing a third example of collision risk.
FIG. 7 is a flow chart illustrating a control flow for determining a processing priority based on the collision risk of the traffic participant.
FIG. 8 is a flow chart illustrating a control flow for adjusting a resolution based on the processing priority of the traffic participant.
FIG. 9 is an illustrative view showing example of images of the specific regions with the resolutions adjusted by the control flow shown in FIG. 8.
FIG. 10 is a flow chart illustrating a control flow for adjusting a recognition-processing level based on the processing priority of the traffic participant.
FIG. 11 is an illustrative view showing parameters for detecting dangerous travel situations.
FIG. 12 is an illustrative view showing specific examples of the parameters for detecting dangerous travel situations.
FIG. 13A is a flow chart illustrating a control flow of a first control example for avoiding dangerous situations.
FIG. 13B is a flow chart illustrating a control flow of a second control example for avoiding dangerous situations.
FIG. 13C is a flow chart illustrating a control flow of a third control example for avoiding dangerous situations.
FIG. 14 is a flow chart illustrating a control flow for adjusting a processing cycle based on the processing priority of the traffic participant, according to a second embodiment of the present invention.
FIG. 15 is an illustrative view showing a specific example of the processing cycle adjusted by the control flow shown in FIG. 14.
FIG. 16 is an illustrative view showing a configuration of an image-recognition neural network for recognition processing according to a third embodiment of the present invention.
FIG. 17 is a flow chart illustrating a control flow for adjusting a number of neurons based on the processing priority of the traffic participant according to the third embodiment of the present invention.
FIG. 18 is an illustrative view showing an example of an image-recognition neural network large in pruning ratio adjusted by the control flow shown in FIG. 17.
FIG. 19 is an illustrative view showing an example of an image-recognition neural network small in pruning ratio adjusted by the control flow shown in FIG. 17.
FIG. 20 is an illustrative view showing a specific example of processing in processing slots under the pruning ratio adjusted by the control flow shown in FIG. 17.
FIG. 21 is a vehicle forward image captured by a camera, and is an illustrative view showing examples of specific regions containing increased traffic participants.
FIG. 22 is a flow chart illustrating a control flow for adjusting the number of neurons based on the processing priority of the traffic participant according to a variation of the third embodiment of the present invention.
FIG. 23 is an illustrative view showing a specific example of processing in processing slots under the pruning ratio adjusted by the control flow shown in FIG. 22.
FIG. 24 is a vehicle forward image captured by a camera, and is an illustrative view showing examples of specific regions containing blind-spot regions.
FIG. 25 is a flow chart illustrating a control flow for determining a collision risk in the blind-spot region according to a fourth embodiment of the present invention.
FIG. 26 is a configuration view of a travel assistance device according to a fifth embodiment of the present invention.
FIG. 27 is an illustrative view showing an example of a camera image inputted to a processing-load setting section shown in FIG. 26.
FIG. 28 is a configuration view of a travel assistance device according to a sixth embodiment of the present invention.

### Mode(s) for Carrying Out the Invention

The following details embodiments of the present invention with reference to the drawings. The present invention is not limited to the embodiments below, but includes therein various modifications and applications within scope of technical concepts of the present invention.

### First Embodiment

### [Explanations for Entire System Configuration]

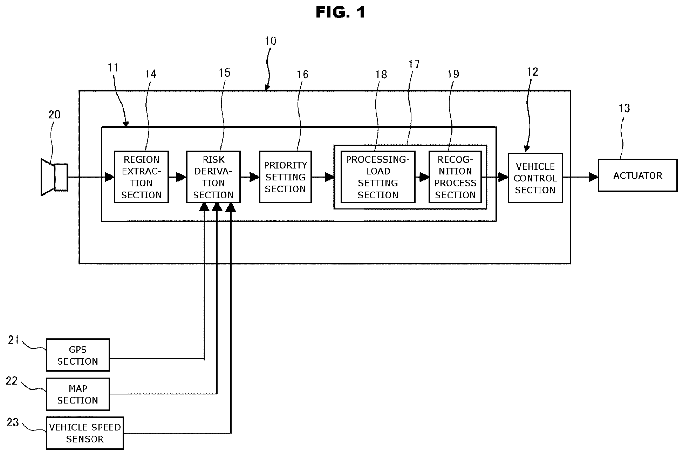

FIG. 1 illustrates functional blocks showing how a travel assistance device according to the embodiments of the present invention is configured. This travel assistance device is structured to perform automatic driving and travel assistance of a vehicle. The vehicle is exemplarily an automobile, while it may be another travel vehicle such as a cargo carriage vehicle used in a warehouse.

Travel assistance device 10 includes at least an information processing section 11 and a vehicle control section 12. Vehicle control section 12 supplies control outputs to an actuator 13. The control outputs are used to control travel conditions of the vehicle. Exemplarily, the control outputs of brake control, accelerator control, steering control, etc. are supplied to actuator 13 for controlling travel of the vehicle. Actuators for brake control, accelerator control, steering control, etc. may be known actuators.

Information processing section 11 exemplarily includes a Central Processing Unit (CPU). In addition to the CPU, information processing section 11 may include a Graphics Processing Unit (GPU), a Field-Programmable Gate Array (FPGA), an Application Specific Integrated Circuit (ASIC), etc., or may be composed of one of them.

The embodiments below are majorly directed to information processing section 11 that is a target of the present invention. As a basis thereof, the present embodiment employs the following approach.

As shown in FIG. 1, information processing section 11 according to the present embodiment includes at least a region extraction section 14, a risk derivation section 15, a priority setting section 16, and an image recognition section 17. Region extraction section 14 extracts specific regions containing traffic participants around the own vehicle, from image information in sensor data. Risk derivation section 15 derives risk degrees of the traffic participants in the extracted specific regions, in view of safe travel of the own vehicle. Priority setting section 16 sets processing priorities of the specific regions depending on the risk degrees. Image recognition section 17 sets information processing loads of the specific regions depending on the processing priorities, and performs image recognition.

Image recognition section 17 includes a processing-load setting section 18 and a recognition processing section 19. Processing-load setting section 18 performs setting about the information processing loads. The following explanations mention image recognition section 17 as itself or as processing-load setting section 18 and recognition processing section 19 that recognize traffic participants.

As described above, information processing section 11 includes region extraction section 14, risk derivation section 15, priority setting section 16, and image recognition section 17. Control functions of them are achieved by executing predetermined control programs stored in a storage of information processing section 11.

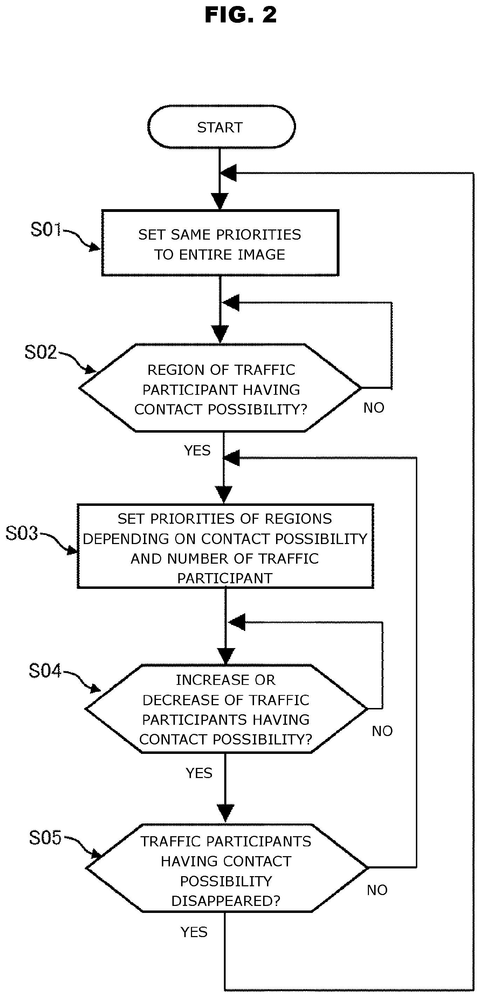

FIG. 2 shows a representative control flow for setting the processing priorities. This control flow is executed by the control programs described above.

### <S01>

Step S01 sets same priorities to entire parts of a captured image. These priorities are merely initial settings, and may be any priorities. Subsequently to setting the initialsetting priority, step S02 is executed.

### <S02>

Step S02 determines whether a traffic participant that may contact with the own vehicle is present or absent in the entire parts of the captured image. If determined that the traffic participant that may contact with the own vehicle is present, the region containing the traffic participant is detected. If determined that the traffic participant that may contact with the own vehicle is absent, step S02 is executed again. On the other hand, in case of presence of the traffic participant that may contact with the own vehicle, step S03 is executed. In addition, the possibility for contact may be classified by levels such as large/middle/small.

### <S03>

Step S03 sets the processing priorities of the respective regions depending on a level of the contact possibility and/or a number of the traffic participant(s). Subsequently to setting of the processing priorities, step S04 is executed. In addition, in response to setting of the priorities, arithmetic processing corresponding to the processing priorities is executed.

For example, the arithmetic processing including a resolution of an image, a cycle of image processing, processing contents of recognition processing, a pruning ratio of a neural network, etc. may be changed depending on the processing priorities. These are detailed below.

### <S04>

Step S04 determines whether increase or decrease of the traffic participant(s) that may contact with the own vehicle, in comparison with a result of a previous processing action, is present or absent. If determined that the said increase or decrease is absent, step S04 is executed again. If determined that the said increase or decrease is present, step S05 is executed.

### <S05>

Step S05 determines whether all of the traffic participants having the possibility of contact have disappeared or not. If determined that the traffic participants with the possibility of contact have not disappeared, step S03 is executed again. If determined that the traffic participants with the contact possibility have disappeared, the system returns to step S01 and repeats the same processes.

This allows early recognition of danger such as contact (i.e., security of safety) and appropriate allotment of computing power, and thereby allows safe travel assistance while effectively utilizing computer resources.

Next, the following returns to FIG. 1 and explains functions of respective components of travel assistance device 10.

### [Explanation for Region Extraction Section]

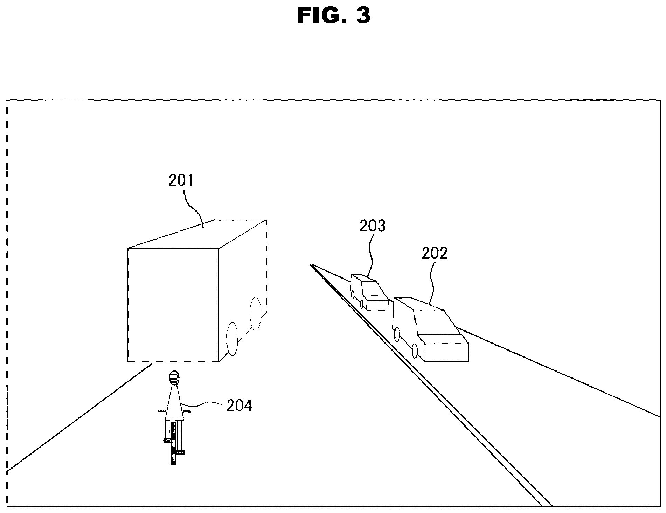

Region extraction section 14 receives input of sensor data from a group of sensors 20 to 23 such as a camera, a RADAR, a LiDAR, etc. For example, in the present embodiment, FIG. 3 shows image information (i.e., sensor data) from the camera. This image information is a single piece of image information of a front space seen from the own vehicle at a time, and shows a parked vehicle 201, oncoming vehicles 202 and 203, and a bicycle 204 around the own vehicle which have been captured. Region extraction section 14 extracts a specific region(s) containing a traffic participant(s) (i.e., a so-called object(s)), from the single piece of the image information.

Traffic participants are divided into moving traffic participants and non-moving traffic participants. Moving traffic participants exemplarily include oncoming vehicles 202 and 203 and bicycle 204. Non-moving traffic participants exemplarily include parked vehicle 201 and road conditions including a shape of the road, road components such as curb stones, a dropped cargo, etc.

The extraction of the specific region(s) containing the traffic participant(s) from image information can be performed by, for example, (1) Region Proposal Network, (2) Selective Search, (3) CPMC (Constrained Parametric Min-Cuts), etc.

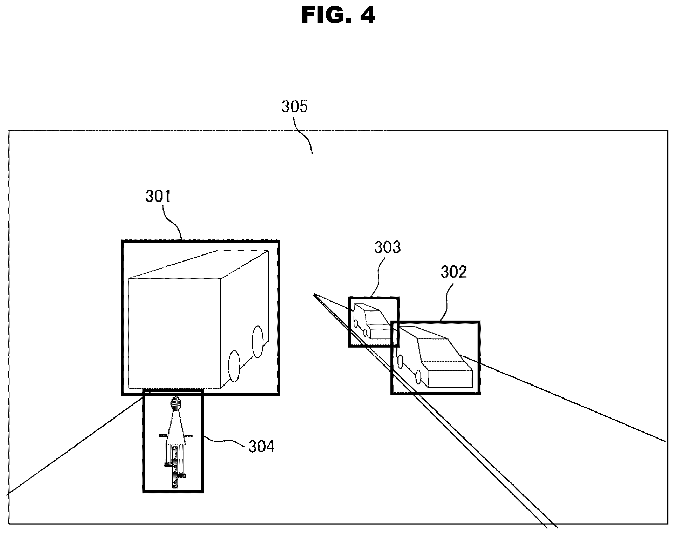

FIG. 4 shows an example of extracting the specific regions, which exemplarily extracts a rectangular specific region 301 containing the parked vehicle 201, rectangular specific regions 302 and 303 containing the oncoming vehicles 202 and 203, and a rectangular specific region 304 containing the bicycle 204. On this occasion, extraction of an entire region 305 of the image information is performed simultaneously with extraction of the specific regions. As described below, such extraction is performed in order to allocate computing power between specific regions 301 to 304 and entire region 305 excluding the specific regions.

In response to extraction of the specific regions in region extraction section 14, risk degrees of those specific regions are determined in risk derivation section 15.

### [Explanation of Risk Derivation Section]

Risk derivation section 15 performs risk degree determination on whether traffic participants 201 to 204 extracted in region extraction section 14 are behaving in a dangerous manner for the own vehicle. The risk degree is a degree of risk to safe travel of the own vehicle, i.e., a degree of danger. For example, the risk includes a situation where another vehicle approaches the own vehicle to cause contact or collision. For this reason, it is necessary to early recognize other vehicles that are about to contact or collide with the own vehicle. This requires allocation of more computing power for the early recognition of other vehicles.

The present embodiment employs an estimated contact time TTC (Time To Collision) for determination of the risk degree. Thus, risk derivation section 15 is configured to receive input of location information from GPS section 21, map information from MAP section 22, and vehicle speed information from vehicle speed sensor 23, while the other information may be used. From this information, the estimated contact time until the own vehicle contacts or collides with another vehicle is calculated. The shorter the estimated contact time TTC is, the higher the risk degree is considered to be. Explanations of methods for calculating the estimated contact time TTC are omitted because of being well known.

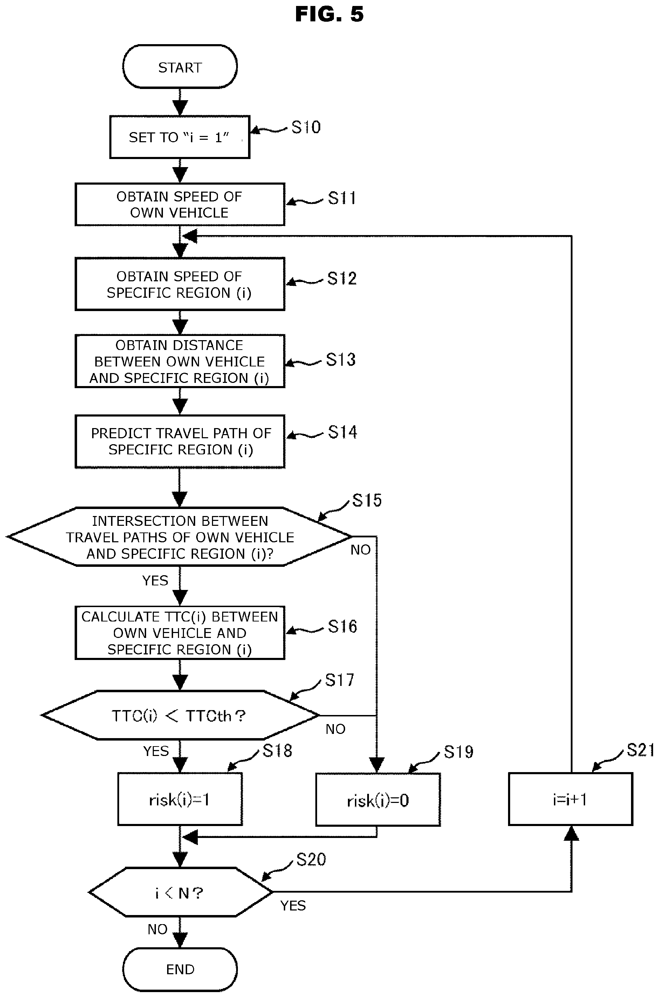

Next, the following explains a control flow for determination of the risk degree, with reference to FIG. 5. The number of the specific regions is N. In FIG. 4, the number of the specific regions is four.

### <Step S10>

Step S10 sets "(i) = 1" to indicate that this is a risk determination for a first specific region. This executes determination of the risk degree in the first specific region. Subsequently to setting (i) to "1", step S11 is executed.

### <Step S11>

Step S11 obtains a speed of the own vehicle. The speed of the own vehicle may be obtained from an output of the speed sensor of the own vehicle, while the speed may be obtained also based on changes in location signals from GPS section 21. Means for obtaining the own vehicle speed are no limited. Subsequently to obtaining of the own vehicle speed, step S12 is executed.

### <Step S12>

Step S12 obtains a speed of the specific region (i = 1). The speed of the specific region (i = 1) may be obtained from image information, wherein the method for that is well known. Subsequently to obtaining of the speed of the specific region (i = 1) is obtained, step S13 is executed.

### <Step S13>

Step S13 obtains an inter-vehicle distance, i.e., a distance between the specific region (i = 1) and the own vehicle. Also the inter-vehicle distance may be obtained from image information, wherein the method for that is well known. Subsequently to obtaining of the distance between the specific region (i = 1) and the own vehicle, step S14 is executed.

### <Step S14>

Step S14 predicts a travel path of the specific region (i = 1). The travel path may be predicted based on map information. Additionally, road conditions such as road shape, road regions, lane markings, and traffic signs may be obtained from the map information. Subsequently to prediction of the travel path of the specific region (i = 1), step S15 is executed.

### <Step S15>

Step S15 determines whether there is an intersection between a travel path of the own vehicle and the travel path of the specific region (i = 1) obtained in the above control step: in other words, whether there is a risk of contact or collision therebetween. If determined that there is an intersection between the travel path of the own vehicle and the travel path of the specific region (i = 1), step S16 is executed. If determined that there is no intersection between the travel paths, step S19 is executed.

### <Step S16>

Step S16 calculates estimated contact time TTC (i = 1) between the specific region (i = 1) and the own vehicle. The calculation of estimated contact time TTC (i = 1) may be performed based on a difference in speed (i.e., a relative speed) between the specific region (i = 1) and the own vehicle obtained in the above control step, and the distance between the specific region (i = 1) and the own vehicle. Subsequently to calculation of estimated contact time TTC (i = 1), step S17 is executed.

### <Step S17>

Step S17 determines whether the estimated contact time TTC (i = 1) calculated in step S17 is shorter than a predetermined estimated contact time threshold TTCth. If determined that estimated contact time TTC (i = 1) is shorter than predetermined estimated contact time threshold TTCth, the risk of contact or collision is deemed high, and step S18 is executed. If determined that estimated contact time TTC (i = 1) is longer than predetermined estimated contact time threshold TTCth, the risk of contact or collision is deemed low, and step S19 is executed.

### <Step S18>

Step S18 sets the risk degree to "risk(i) = 1" and shifts to step S20, since the risk of contact or collision has been deemed high by step S17. The "1" in the right-hand side indicates a high risk. This means that the specific region (i = 1) is deemed to be a high-risk specific region.

### <Step S19>

Step S19 sets the risk degree to "risk(i) = 0" and shifts to step S20, since having been determined that there is no intersection between the travel paths by step S15, or that the risk of contact or collision is low by step S17. The "0" in the right-hand side indicates a low risk. This means that the specific region (i = 1) is deemed to be a low-risk specific region.

### <Step S20>

Step S20 determines whether current risk degree determination has been executed for all of the N specific regions. Therefore, if determined that the current risk degree determination has been executed for all of the N specific regions, the flow is terminated.

On the other hand, if determined that the risk degree determination has not been executed for all of the N specific regions, step S21 is executed because here the risk degree determination for the specific region (i = 1) is being performed.

### <Step S21>

Step S21 sets (i) to "i + 1", and then returns to step S12 again and determines the risk degree of a second specific region. Hereafter, the above control steps are executed until (i) reaches "N". In FIG. 3, it is assumed that bicycle 204 will move to the right to avoid parked vehicle 201, and may collide with the own vehicle. Thus, specific region 304 in FIG. 4 is determined to be a high-risk specific region. Specific regions 301 to 302 corresponding to oncoming vehicles would not affect travel of the own vehicle and not collide with the own vehicle, and are accordingly determined to be low-risk specific regions. Specific region 301 being a parked vehicle would not affect travel of the own vehicle and not collide with the own vehicle, and are accordingly determined to be a low-risk specific region.

Although the above explanation exemplifies determining the risks in the respective specific regions by two levels, the present invention is not limited to that, and the risks may be determined by three or more levels. For example, as shown in FIG. 4, it is allowed to set the risk degrees in levels such as "high-risk specific region 304 > low-risk specific regions 301, 302, and 303 > background region 305", by setting image information excluding the specific regions to a background level. Of course, it is also allowed to divide high-risk specific regions and low-risk specific regions into more detailed levels.

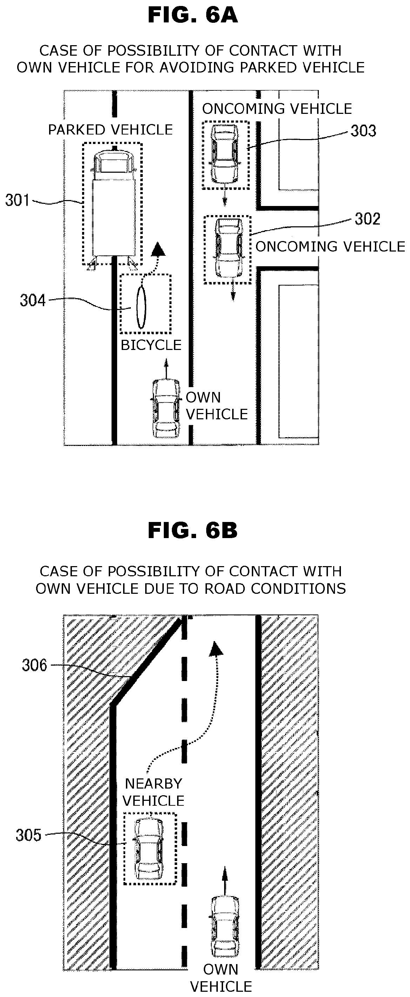

Thus, the present embodiment determines the risk degrees by using the estimated contact time TTC. FIGs. 6A to 6C show examples of high-risk specific regions.

FIG. 6A shows an example of a case that another vehicle may collide with the own vehicle for avoiding a parked vehicle. The own vehicle is surrounded by parked vehicle 301, oncoming vehicles 302 and 303, and bicycle 304. Parked vehicle 301 and oncoming vehicles 302 and 303 are low in risk of colliding with the own vehicle, and are determined to belong to low-risk specific regions. On the other hand, as mentioned above, bicycle 304 is predicted to move to the front of the own vehicle for avoiding parked vehicle 301 located on the side thereof, and is accordingly determined to belong to a high-risk specific region. In addition, oncoming vehicles 302 and 303 and bicycle 304 are a kind of "moving traffic participants".

FIG. 6B shows an example of a case that the own vehicle may contact with a nearby vehicle 305 due to change in road conditions. Nearby vehicle 305 faces a bent-shaped region 306 where a direction of the road changes toward a travel direction of the own vehicle. Thus, nearby vehicle 305 is predicted to move from its current travel lane into an own vehicle's travel lane and then to the front of the own vehicle, and is accordingly determined to belong to a high-risk specific region. In addition, road conditions such as bent-shaped region 306, which are obtained from map information, are a kind of "non-moving traffic participants".

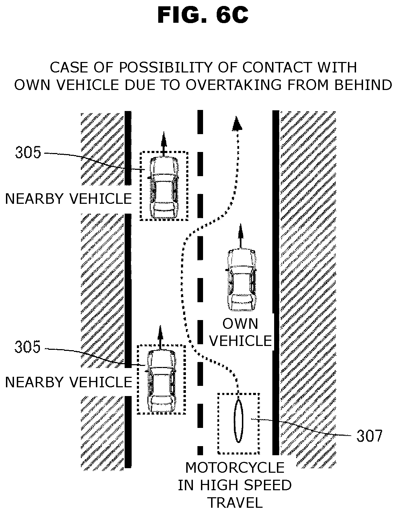

FIG. 6C is an example of a case that another vehicle may contact with the own vehicle due to overtaking from behind, etc. In this case, the own vehicle and nearby vehicle 305 are travelling parallel, and a high-speed motorcycle 307 is predicted to overtake from behind and move to the front of the own vehicle and is accordingly determined to belong to a high-risk specific region. In addition, nearby vehicle 305 and motorcycle 307 are a kind of "moving traffic participant".

Thus, risk derivation section 15 is configured to predict whether a traffic participant in front of, beside, or behind the own vehicle, which has been extracted by region extraction section 14, may behave dangerously to the own vehicle or not, and determine a risk degree thereof.

In more detail, risk derivation section 15 is configured to predict movement of a moving traffic participant from behavior of the moving traffic participant, and derive a risk degree thereof. Moreover, in addition to behavior of the moving traffic participant, risk derivation section 15 is configured to predict movement of the moving traffic participant from existence of a non-moving traffic participant, and derive the risk degree.

Furthermore, risk derivation section 15 is configured to estimate an estimated contact time until the moving traffic participant becomes an obstacle to safe travel of the own vehicle, and derive a risk depending on the estimated contact time. The estimated contact time estimated by risk derivation section 15 is an estimated contact time until the moving traffic participant comes into contact with the own vehicle, wherein the risk is derived from the estimated contact time.

Still further, risk derivation section 15 is configured to estimate the estimated contact time with use of a size, a travel direction, a travel speed, and an travel acceleration of the moving traffic participant. Thus, risk derivation section 15 is configured to predict behavior of the moving traffic participant from existence of the non-moving traffic participant(s), which is/are an obstacle around the moving traffic participant and/or road conditions, and predict movement of the moving traffic participant, and thereby derive the risk degree.

The control flow of FIG. 5 determines the risk degree by two levels of a high risk and a low risk, based on estimated contact time TTC with the own vehicle. However, it is allowed to determine a moving traffic participant behaving abnormally to belong to a high risk even if being low in possibility of contacting with the own vehicle.

For example, such abnormal behavior includes (1) an unstable travel path of the moving traffic participant, (2) an extremely narrow distance to a neighbor vehicle, (3) an extremely fast or slow speed in comparison with surrounding vehicles, and (4) rapid acceleration or deceleration. It is also allowed to determine the risk degree based on these actions.

Also objects other than moving traffic participants may be targets for risk degree determination. For example, such objects include (1) an object dropped on a road, (2) a ball or an animal that run out from an alley connected to a road, and (3) an object such as a dropped luggage or a detached tire from a nearby vehicles.

In FIG. 5, the risk degree is determined based on estimated contact time TTC with the own vehicle. However, it is allowed to determined even a specific region low in risk of contact with the own vehicle, to be high in risk degree if being short in distance to the own vehicle. This allows the specific region to be set high in priority for recognition processing in case of some change in situation.

After derivation of risk degrees in specific regions by risk derivation section 15, processing priorities are set depending on the risk degrees.

### [Explanation of Priority Setting Section]

Priority setting section 16 executes setting of processing priorities of respective specific regions depending on risk degrees of the specific regions derived by risk derivation section 15. The processing priorities are an indicator for allocating computing power of the computer, and are linked to the risk degrees. As described below, a specific region high in processing priority is high in processing load of recognition processing, but can be high in recognition accuracy. Contrarily, a specific region low in processing priority is not so high in recognition accuracy, but can be reduced in processing load of the recognition process.

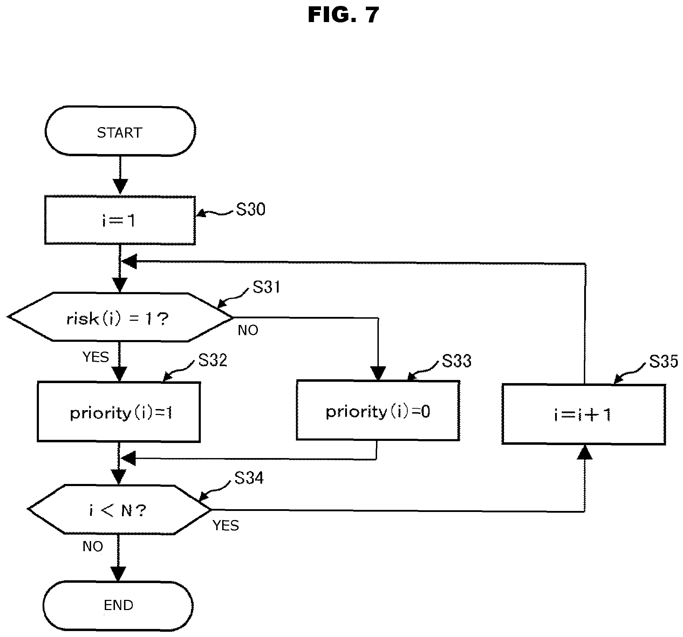

The following describes a control flow for setting the processing priorities, with reference to FIG. 7. The specific regions are N in number, while they are four in number in FIG. 4.

### <Step S30>

Step S30 sets "i = 1" to indicate that this is setting of a processing priority for a first specific region. Then, setting of the processing priority of the first specific region is executed. Subsequently to setting of (i) to "1", step S31 is executed.

### <Step S31>

Step S31 determines whether the risk degree of the first specific region is the high risk "1" or not. This risk degree refers to the determination result of step S18 or S19 shown in FIG. 5. If determined that the risk degree is the high risk "1", step S32 is executed. If determined that the risk degree is not the high risk "1", i.e., the risk degree is the low risk "0", step S33 is executed.

### <Step S32>

Since the risk degree has been determined to be the high risk "1" in step S31, step S32 sets the processing priority to a high processing priority "priority(i) = 1". The "1" on the right-hand side means the high processing priority. As described above, this serves to allocate computing power of the computer in order to increase the recognition accuracy although increasing the processing load of the recognition process too. Subsequently to setting of the processing priority, step S34 is executed.

### <Step S33>

Since the risk degree has been determined to be the low risk "0" in step S31, step S33 sets the processing priority to a low processing priority "priority(i) = 0". The "0" on the right-hand side means the low processing priority. As described above, this serves to allocate computing power of the computer in order to reduce the processing load of the recognition process although reducing the recognition accuracy too. Subsequently to setting of the processing priority, step S34 is executed.

### <Step S34>

Step S34 determines whether the current processing priority setting has been executed for all of the N specific regions. Therefore, if the processing priority setting has been executed for all of the N specific regions, the flow is terminated.

If the processing priority setting has not been executed for all of the N specific regions, step S35 is executed because here the processing priority setting for the specific region (i = 1) is being performed.

### <Step S35>

Step S35 sets (i) to "i + 1", and thereby returns to step S31 again and determines a risk degree of the second specific region. Hereafter, the above control steps are executed until (i) reaches N. In case of FIG. 4, specific region 304 is set high in processing priority, while specific regions 301 to 303 are set low in processing priority.

After the processing priorities for the specific regions have been set by priority setting section 16, image recognition section 17 executes priority processing depending on the processing priority.

### [Explanation for Image Recognition Section]

Image recognition section 17 includes at least the processing-load setting section 18 and the recognition processing section 19.

### [(1) Explanation for Processing-load Setting Section]

Processing-load setting section 18 being a part of image recognition section 17 is configured to set and execute processing loads for the specific regions depending on the processing priorities of the respective specific regions set by priority setting section 16. Processing-load setting section 18 is configured to allocate loads of the recognition processing subsequently performed by recognition processing section 19, depending on the processing priorities of the respective specific region.

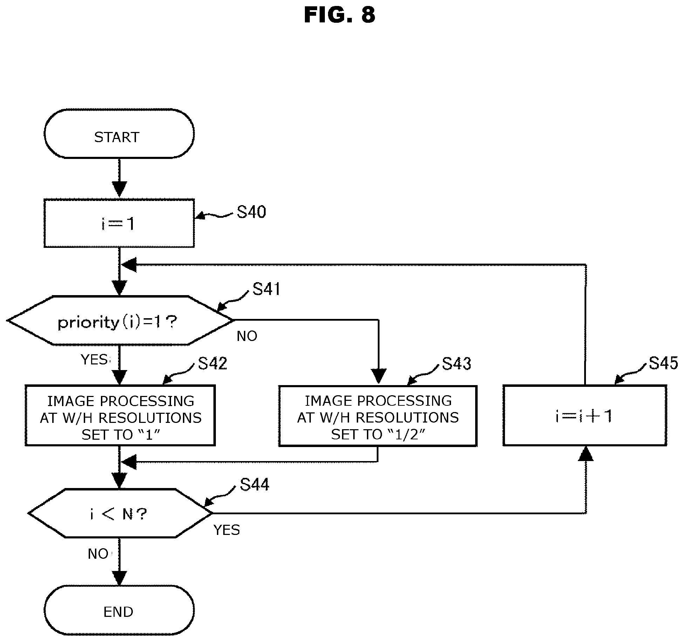

Next, the following describes a control flow for setting and executing the processing loads for the respective specific regions, with reference to FIG. 8. The specific regions are N in number, while they are four in number in FIG. 4. The following also describes an example of adjusting resolutions of images as a setting of the processing load.

### <Step S40>

Step S40 sets "i = 1" to indicate that this is setting and implementation of a processing load for the first specific region. Then, the processing load for the first specific region is set and implemented as described below. Subsequently to setting of (i) to "1", step S41 is executed.

### <Step S41>

Step S41 determines whether the processing priority of the first specific region is the high processing priority "1" or not. This processing priority refers to the determination result of step S32 or S33 shown in FIG. 7. If determined that the processing priority is the high processing priority "1", step S42 is executed. If determined that the processing priority is not the high processing priority "1", i.e., the processing priority is the low processing priority "0", step S43 is executed.

### <Step S42>

Since the processing priority has been determined to be the high processing priority "1" in step S41, step S42 sets both of width and height resolutions of an image to "1". This means that image information of the specific region is used as is, upon implementation of recognition processing. Subsequently to implementation of processing of the image information of the specific region, step S44 is executed.

### <Step S43>

Since the processing priority has been determined to be the low processing priority "0" in step S41, step S43 sets both of width and height resolutions of the image to "1/2". This means that the image information of the specific region is reduced and compressed to 1/2, upon implementation of the recognition processing. Subsequently to implementation of processing of the image information of the specific region, step S44 is executed.

### <Step S44>

Step S44 determines whether current setting and implementation of the processing loads have been executed for all of the N specific regions. Therefore, if setting and implementation of the processing loads have been executed for all of the N specific regions, the flow is terminated.

If setting and implementation of the processing loads have not been executed for all of the N specific regions, step S45 is executed because here setting and implementation of the processing load for the specific region (i = 1) is being performed.

### <Step S45>

Step S45 sets (i) to "i + 1", and then returns to step S41 again and determines the processing priority of the second specific region. Hereafter, the above control steps are executed until (i) reaches N. In case of FIG. 4, the resolutions of specific region 304 is set to "1/1", while the resolutions of specific regions 301 to 303 is set to "1/2".

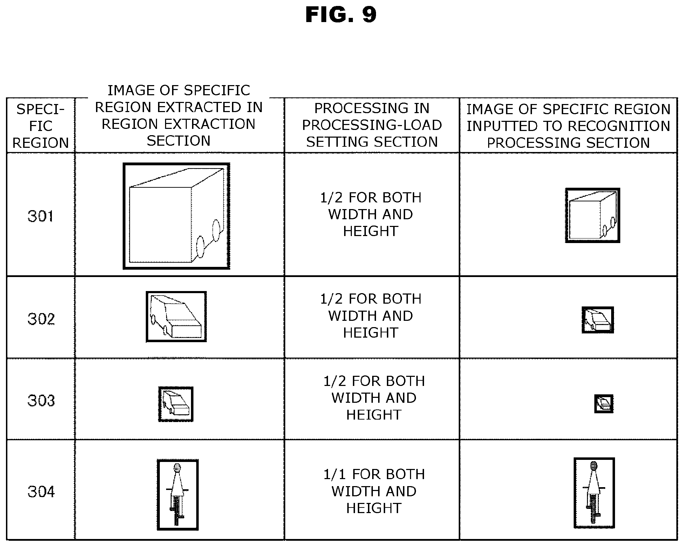

FIG. 9 simply illustrates how the image information is processed according to the control flow shown in FIG. 8. FIG. 9 shows the specific regions, the images extracted from the specific regions, the settings of the processing loads in processing-load setting section 18, and the images of the specific regions inputted to recognition processing section 19. These are based on a state shown in FIG. 4.

Specific region 301 is a parked vehicle, and is set to "0" in risk degree and processing priority. Thus, in processing-load setting section 18, specific region 301 is set to "1/2" in both of width and height resolutions, and is reduced to 1/2 in image information upon sending it to recognition processing section 19.

Similarly, each of specific region 302 and 303 is an oncoming vehicle, and is set to "0" in risk degree and processing priority. Thus, in processing-load setting section 18, each of specific region 302 and 303 is set to "1/2" in both of width and height resolutions, and is reduced to 1/2 in image information upon sending it to recognition processing section 19.

On the other hand, specific region 304 is a bicycle, and is set to "1" in risk degree and processing priority. Thus, in processing-load setting section 18, specific region 304 is set to "1" in both of width and height resolutions, and the image information as is of specific region 304 is sent to recognition processing section 19.

### [(2) Explanation for Recognition Processing Section]

Next, recognition processing section 19 being a part of image recognition section 17 is configured to identify classes of the traffic participants in the specific regions, from the image information sent from processing-load setting section 18. The classes include things such as vehicles, motorcycles, and pedestrians. Recognition processing section 19 is configured to identify and recognize such kinds of things. Furthermore, recognition processing section 19 is configured to identify and recognize also travel directions, travel speeds, travel accelerations, etc., of those vehicles, motorcycles, and pedestrians, etc.

Processing-load setting section 18 has set the resolutions (i.e., image sizes) of the respective specific regions depending on the processing priorities. Thus, recognition processing section 19 is expected to present high recognition accuracy upon the recognition processing for the high-priority specific regions although high in processing load too, because the high-priority specific regions are set high in resolution. On the other hand, reduction in processing load is expected in the low-priority specific regions, because the low-priority specific regions are set low in resolution.

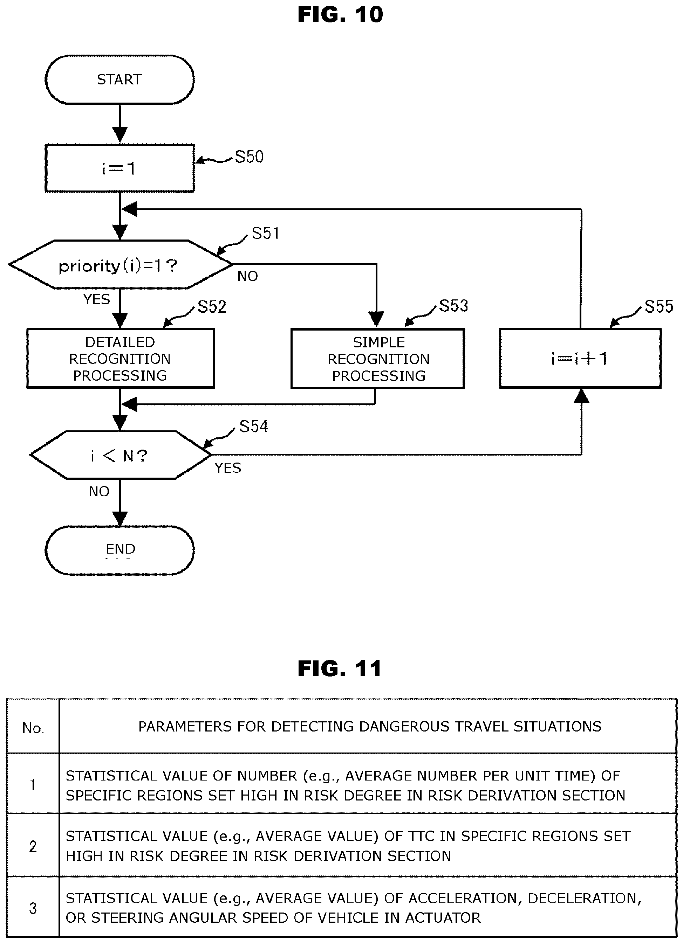

Recognition processing section 19 is also configured to adjust setting of items to be recognized depending on the processing priorities, a control flow of which is shown in FIG. 10.

### <Step S50>

Step S50 sets "(i) = 1" to indicate that this is setting and implementation of the processing load for the first specific region. This causes the following recognition processing for the first specific region to be set and implemented. Subsequently to setting of (i) to "1", step S51 is executed.

### <Step S51>

Step S51 determines whether the processing priority of the first specific region is the high processing priority "1" or not. This processing priority refers to the determination result of step S32 or S33 shown in FIG. 7. If determined that the processing priority of the first specific region is the high processing priority "1", step S52 is executed. If determined that the processing priority of the first specific region is not the high processing priority "1", i.e., is the low processing priority "0", step S53 is executed.

### <Step S52>

Step S52 implements a detailed recognition processing, because the processing priority has been determined to be the high processing priority "1" in step S51. The detailed recognition processing includes a processing including identification of classes (e.g., vehicle, motorcycle, pedestrian, etc.) of traffic participants in the specific regions and recognition of travel directions, travel speeds, travel accelerations, etc. of the vehicle, motorcycle, pedestrian, etc. Subsequently to the recognition processing of the traffic participants in the specific regions, step S54 is executed.

### <Step S53>

Step S53 implements a simple recognition processing, because the processing priority has been determined to be the low processing priority "0" in step S51. The simple recognition processing is a processing including identification of classes (e.g., vehicle, motorcycle, pedestrian, etc.) of traffic participants in the specific regions, and does not implement a processing for recognition of travel directions, travel speeds, travel accelerations, etc. of the vehicle, motorcycle, pedestrian, etc.. Subsequently to the recognition processing of the traffic participants in the specific regions, step S54 is executed.

### <Step S54>

Step S54 determines whether the recognition processing has been implemented for all of the N specific regions or not. Thus, if the recognition processing has been implemented for all of the N specific regions, the flow is terminated.

On the other hand, if the recognition processing has not been implemented for all of the N specific regions, step S55 is executed because here setting and implementation of the recognition processing for the specific region (i = 1) is being performed.

### <Step S55>

Step S55 sets (i) to "i + 1", and then returns to step S51 again and implements the recognition processing for the second specific region. Hereafter, the above control steps are executed until (i) reaches N.

This serves for further appropriate allotment of computing power and further effective utilization of computer resources.

### [Explanation for Vehicle Control Section and Actuator]

Vehicle control section 12 calculates control signals to be sent to the actuator, in correspondence to behavior of the traffic participants recognized by recognition processing section 19. Typically, vehicle control section 12 supplies control outputs for brake control, accelerator control, steering control, etc. to actuator 13 in order to control travel of the own vehicle.

Vehicle control section 12 is configured to detect dangerous travel situations, based on statistical values with reference to the risk degree and the estimated contact time TTC of risk derivation section 15 described above, the acceleration and the deceleration and a steering angular speed of the vehicle, etc., and then correct the control outputs for travel control, notify a driving of a warning, etc. Specific examples thereof are described below.

FIG. 11 shows parameters for detecting dangerous travel situations. The first parameter is a statistical value of a number (e.g., an average number per unit time) of the specific regions set "high" in risk degree determined by risk derivation section 15. The second parameter is a statistical value (e.g., average value) of estimated contact times TTC in the specific regions set "high" in risk degree determined by risk derivation section 15. The third parameter is a statistical value (e.g., an average value) of the acceleration, the deceleration, or the steering angular speed in actuator 13.

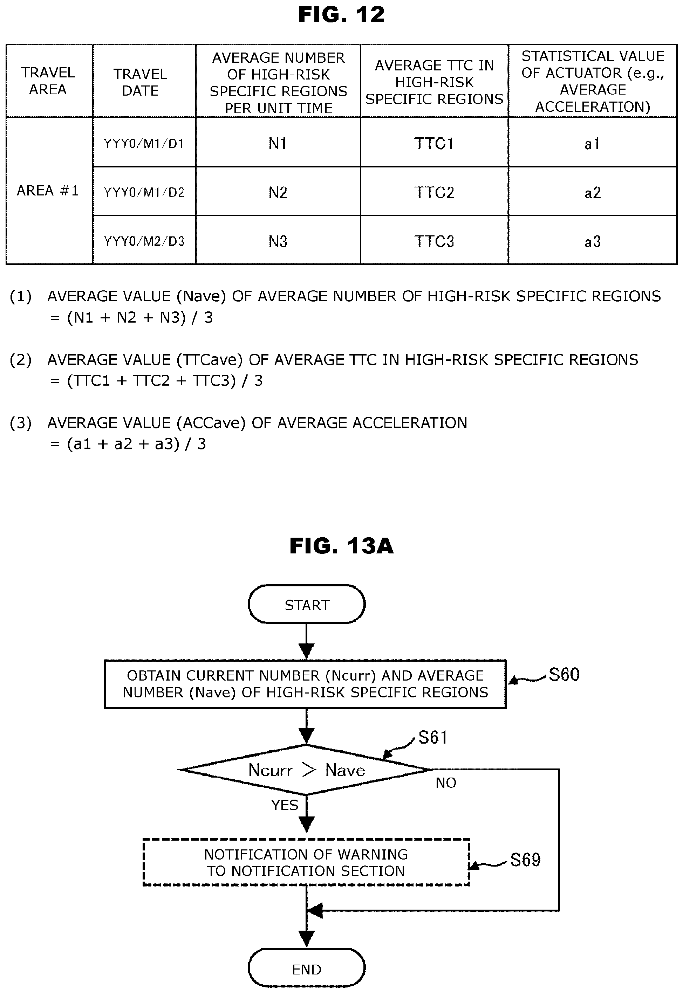

FIG. 12 is a specific example thereof, which shows average values of the following five items at different dates and times: (1) a travel area, (2) a travel date, (3) an average number of high-risk specific regions per unit time, (4) an average estimated contact time TTC in high-risk specific regions, and (5) an average acceleration of the own vehicle. In addition, also the speed of the own vehicle may be used employed as one of the parameters. The overall average values are calculated with use of formulas (1) to (3) shown in the drawing.

Usage of these parameters allows calculation or learning of conditions in normal operation, and thereby allows detection of a dangerous situation in response to conditions deviating significantly from the normal conditions, and then correction of the control outputs, notification of a warning for a driver.

Next, the following describes specific control flows thereof with reference to FIGs. 13A to 13C. FIG. 13A shows an example of notifying a driver of a warning.

### <Step S60>

Using a method such as one shown in FIGs. 11 and 12, step S60 obtains an average number Nave of the specific regions set "high" in risk degree, and further obtains a current number Ncurr of the specific regions set "high" in risk degree. Subsequently to obtaining of these kinds of information, step S61 is executed.

### <Step S61>

Step S61 determines whether the current number Ncurr of the specific regions set "high" in risk degree is greater than the average number Nave of the specific regions set "high" in risk degree or not. This allows determination that the current situation is dangerous if the number Ncurr of the specific regions set "high" in risk degree is greater in comparison with normal travel.

If determined that the current number Ncurr of the specific regions set "high" in risk degree is greater than the average number Nave of the specific regions set "high" in risk degree, step S69 is executed. If determined that the current number Ncurr of the specific regions set "high" in risk degree is less than the average number Nave of the specific regions set "high" in risk degree, the flow shifts to the end, and the processing is terminated.

### <Step S69>

Step S61 has determined that the current number Ncurr of the specific regions set "high" in risk degree is greater than the average number Nave of the specific regions set "high" in risk degree, and accordingly the current situation is dangerous. Thus, step S69 notifies a driver of a danger in the current situation with use of a display device or a speaker, in order to call a driver's attention.

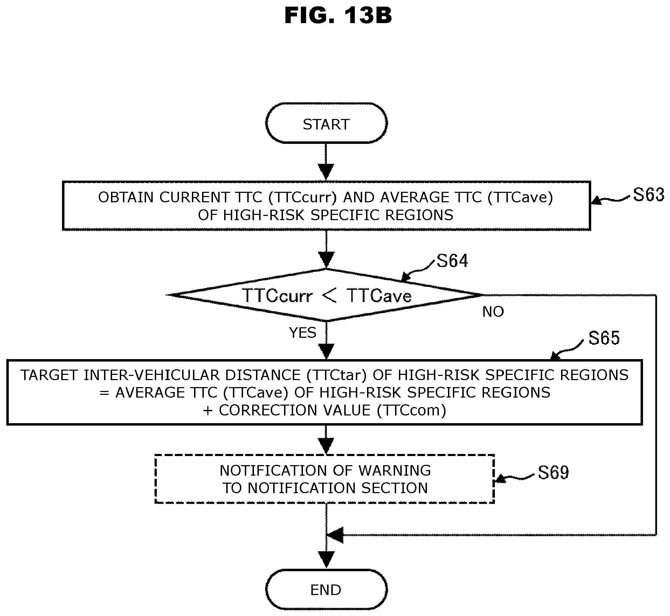

Next, FIG. 13B shows an example of correcting a target inter-vehicular distance between the own vehicle and another vehicle as a control output. Here, estimated contact time TTC is used as an alternative parameter for the inter-vehicular distance.

### <Step S63>

Using a method such as one shown in FIGs. 11 and 12, step S63 obtains an average TTC value TTCave of the specific regions set "high" in risk degree, and further obtains a current TTC value TTCcurr of the specific regions set "high" in risk degree. Subsequently to obtaining of these kinds of information, step S64 is executed.

### <Step S64>

Step S64 determines whether the current TTC value TTCcurr of the specific regions set "high" in risk degree is greater than the average TTC value TTCave of the specific regions set "high" in risk degree. This allows determination that the current situation is dangerous if the TTC value TTCcurr of the specific regions set "high" in risk degree is less in comparison with normal travel. If determined that the current TTC value TTCcurr of the specific regions set "high" in risk degree is less than the average TTC value TTCave of the specific regions set "high" in risk degree, step S65 is executed. If determined that the current TTC value TTCcurr of the specific regions set "high" in risk degree is greater than the average TTC value TTCave of the specific regions set "high" in risk degree, the flow shifts to the end, and the processing is terminated.

### <Step S65>

Step S64 has determined that the current TTC value TTCcurr of the specific regions set "high" in risk degree is less than the average TTC value TTCave of the specific regions set "high" in risk degree, and accordingly the current situation is dangerous. Thus, step S65 calculates a new target inter-vehicular distance TTCtar by adding a correction value TTCcom to the average TTC value TTCave of the specific regions set "high" in risk degree. This prevents the own vehicle from traveling at a dangerous inter-vehicular distance. Subsequently to this process, the flow shifts to the end, and the processing is terminated.

In another manner, step S65 may be replaced with step S69. Step S69 notifies a driver of a danger in the current situation with use of a display device or a speaker, in order to call a driver's attention. In still another manner, both of steps S65 and S69 may be employed.

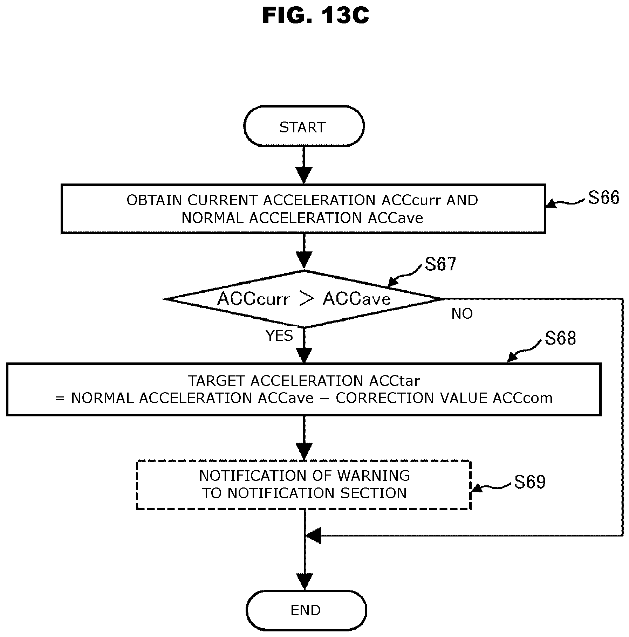

Next, FIG. 13C shows an example of correcting a target acceleration of the own vehicle as a control output.

### <Step S66>

Using a method such as one shown in FIGs. 11 and 12, step S66 obtains a normal acceleration ACCave, and further obtains a current acceleration ACCcurr being a current control output. Subsequently to obtaining of these kinds of information, step S67 is executed.

### <Step S67>

Step S67 determines whether current acceleration ACCcurr is greater than normal acceleration ACCave. This allows determination that the current situation is dangerous if current acceleration ACCcurr is greater in comparison with normal travel.

If determined that current acceleration ACCcurr is greater than normal acceleration ACCave, step S68 is executed. If determined that current acceleration ACCcurr is less than normal acceleration ACCave, the flow shifts to the end, and the processing is terminated.

### <Step S68>

Step S67 has determined that current acceleration ACCcurr is greater than normal acceleration ACCave, and accordingly the current situation is dangerous. Thus, step S68 subtracts a correction value ACCcom from normal acceleration ACCave, and calculates a new target acceleration ACCtar. This prevents the own vehicle from traveling at a dangerous acceleration. Subsequently to this process, the flow shifts to the end, and the processing is terminated.

In another manner, step S68 may be replaced with step S69. Step S70 notifies a driver of a danger in the current situation with use of a display device or a speaker, in order to call a driver's attention. In still another manner, both of steps S68 and S69 may be employed.

As described above, the present embodiment serves for early recognition of a danger such as contact (i.e., security of safety) and appropriate allotment of computing power, and thereby serves for safe travel assistance while effectively utilizing computer resources.

The following describes other embodiments (including a variation) related to the present embodiment.

### Second Embodiment

The first embodiment of the present invention is configured such that processing-load setting section 18 adjusts resolutions of inputted images of specific regions, depending on processing priorities. Differently from this, the second embodiment is configured such that processing-load setting section 18 adjusts processing cycles of inputted images depending on processing priorities.

Region extraction section 14, risk derivation section 15, and priority setting section 16 are similar to the first embodiment in functions thereof, explanations of which are omitted in the following.

According to the present embodiment, the image information of the specific regions inputted to processing-load setting section 18 is processed at a short cycle in case of a high processing priority, and is processed at a long cycle in case of a processing priority. The image processing includes capturing process and transferring process of the inputted images.

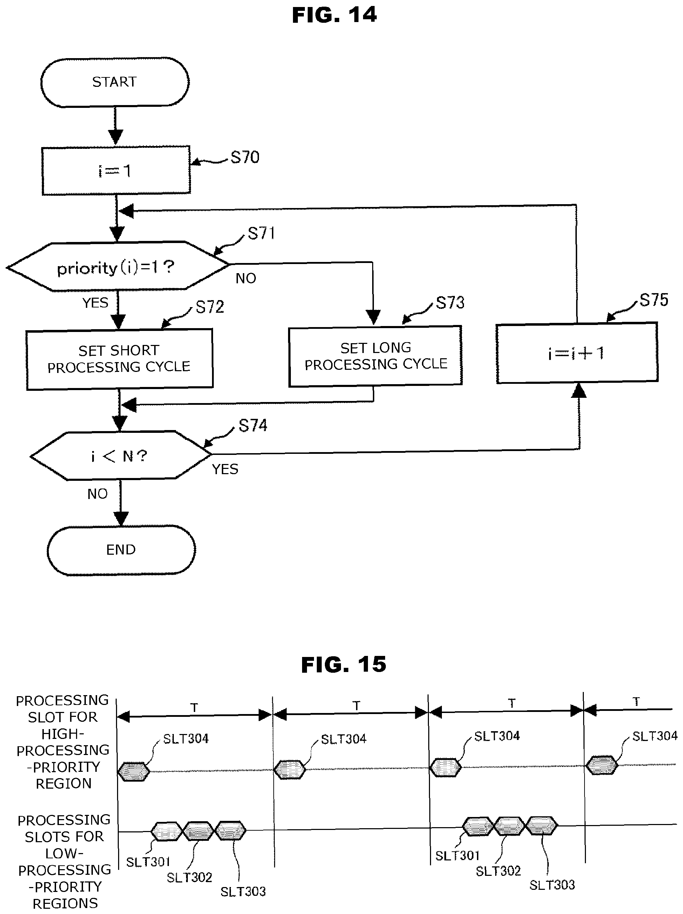

FIG. 14 shows a specific control flow. The following explanations are written with reference to the drawings. Also these explanations are based on a situation shown in FIGs. 3 and 4.

### <Step S70>

Step S70 sets "(i) = 1" to indicate that this is setting and implementation of the processing load for the first specific region. This causes the following image processing for the first specific region to be set and implemented. Subsequently to setting of (i) to "1", step S71 is executed.

### <Step S71>

Step S71 determines whether the processing priority of the first specific region is the high processing priority "1" or not. This processing priority refers to the determination result of step S32 or S33 shown in FIG. 7. If determined that the processing priority is the high processing priority "1", step S72 is executed. If determined that the processing priority is not the high processing priority "1", i.e., that the processing priority is the low processing priority "0", step S73 is executed.

### <Step S72>

Since step S71 has determined the processing priority to be the high processing priority "1", step S72 sets a short processing cycle. The processing cycle is a cycle of image processing (including capturing, transferring, etc. of the image). The shorter the processing cycle is, the more the image processing is performed. Subsequently to setting of the cycle of image processing for the specific region, step S74 is executed.

### <Step S73>

Since step S71 has determined the processing priority to be the low processing priority "0", step S73 sets a long processing cycle. The processing cycle is a cycle of image processing (including capturing, transferring, etc. of the image). The longer the processing cycle is, the less the image processing is performed. Subsequently to setting of the cycle of image processing for the specific region, step S74 is executed.

### <Step S74>

Step S74 determines whether setting of the image processing cycle has been implemented for all of the N specific regions. Thus, if setting of the image processing cycle has been implemented for all of the N specific regions, the flow exits to the end.

On the other hand, if setting of the image processing cycle has not been implemented for all of the N specific regions, step S75 is executed because here the image processing for the specific region (i = 1) is being performed.

### <Step S75>

Step S75 sets (i) to "i + 1", and then returns to step S71 again and implements setting of the image processing cycle for the second specific region. Hereafter, the above control steps are executed until (i) reaches N.

FIG. 15 shows how the image processing differs between a case of a short processing cycle and a case of a long processing cycle. The reference sign "T" in the drawing represents a processing cycle within which processing in processing slots is executed.

Processing in a processing slot SLT304 for specific region 304 set with the high processing priority is executed every processing cycle. In contrast, processing in processing slots SLT301 to SLT303 for specific regions 301 to 303 set with the low processing priority is executed once every two processing cycles. Thus, the specific region(s) with the low processing priority is/are less than the specific region(s) with the high processing priority, in frequency of processing execution.

This reduces recognition processing section 19 in computing load, and thereby serves to perform safe travel assistance while effectively utilizing computing resources.

### Third Embodiment

The first embodiment of the present invention is configured such that processing-load setting section 18 adjusts resolutions of inputted images of specific regions depending on processing priorities. The second embodiment is configured such that processing-load setting section 18 adjusts processing cycles of inputted images depending on processing priorities. Differently from these, the third embodiment is configured to adjust a pruning ratio of a neural network for image recognition.

Region extraction section 14, risk derivation section 15, and priority setting section 16 are similar to the first embodiment in functions thereof, explanations of which are omitted in the following.

According to the present embodiment, image information of specific regions inputted to the image recognition neural network formed in processing-load setting section 18 is processed under a low pruning ratio in case of a high processing priority, and processed under a high pruning ratio in case of a low processing priority. In addition, the image recognition neural network may be formed in recognition processing section 19.

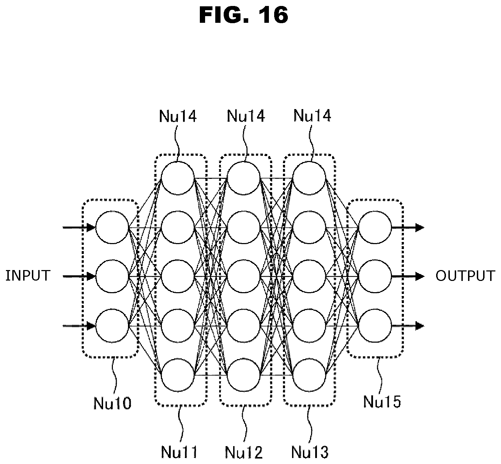

FIG. 16 shows the neural network for image recognition. The image recognition neural network in FIG. 16 includes an input layer Nu10, a first layer Nu11 and a second layer Nu12 and a third layer Nu13 subsequent to input layer Nu10, and an output layer Nu15. Image information is inputted to input layer Nu10, processed as input information in first layer Nu11 to third layer Nu13 by convolutional processing with use of multiple neurons Nu14, and is outputted from output layer Nu15 as output information. This type of convolutional neural network is an effective method for image recognition processing.

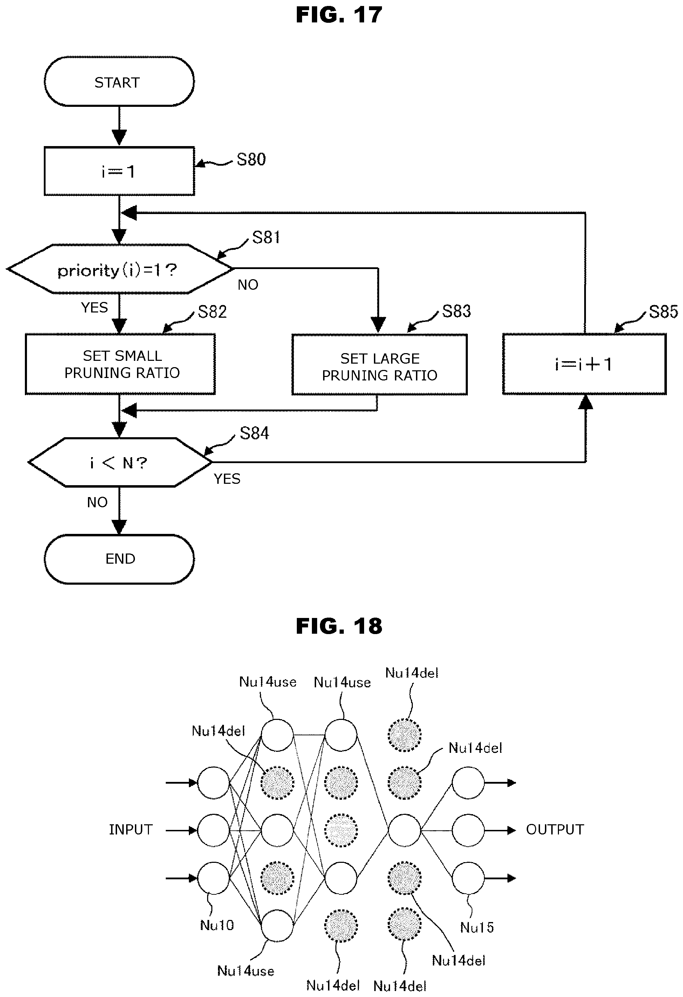

Next, the following explains a control flow for adjusting the pruning ratio depending on the processing priorities, with reference to FIG. 17. Also this explanation is based on the situation shown in FIGs. 3 and 4.

The pruning ratio is a ratio of a number of unused neurons with respect to a total number of neurons. Decrease in pruning ratio (i.e., increase in number of neurons used) improves recognition accuracy while requiring more calculation time. Increase in pruning ratio (i.e., decrease in number of neurons used) reduces recognition accuracy while shortening calculation time.

### <Step S80>

Step S80 sets "(i) = 1" to indicate that this is setting and implementation of the processing load for the first specific region. This causes the following image processing for the first specific region to be set and implemented. Subsequently to setting of (i) to "1", step S81 is executed.

### <Step S81>

Step S81 determines whether the processing priority of the first specific region is the high processing priority "1" or not. This processing priority refers to the determination result of step S32 or S33 shown in FIG. 7. If determined that the processing priority is the high processing priority "1", step S82 is executed. If determined that the processing priority is not the high processing priority "1", i.e., that the processing priority is the low processing priority "0", step S83 is executed.

### <Step S82>

Since step S81 has determined the processing priority to be the high processing priority "1", step S82 sets a small pruning ratio. As described above, decrease in pruning ratio improves recognition accuracy while requiring more calculation time. Subsequently to setting of the pruning ratio for the image processing of the specific region, step S84 is executed.

### <Step S83>

Since step S81 has determined the processing priority to be the low processing priority "0", step S83 sets a large pruning ratio. As described above, increase in pruning ratio reduces recognition accuracy while shortening calculation time. Subsequently to setting of the pruning ratio for the image processing of the specific region, step S84 is executed.

### <Step S84>

Step S84 determines whether setting of the pruning ratio for image processing has been implemented for all of the N specific regions. Thus, if setting of the pruning ratio for image processing has been implemented for all of the N specific regions, the flow exits to the end.

On the other hand, if setting of the pruning ratio for image processing has not been implemented for all of the N specific regions, step S85 is executed because here the image processing of the specific region (i = 1) is being performed.

### <Step S85>

Step S85 sets (i) to "i + 1", and then returns to step S81 again and implements setting of the pruning ratio for image processing of the second specific region. Hereafter, the above control steps are executed until (i) reaches N.

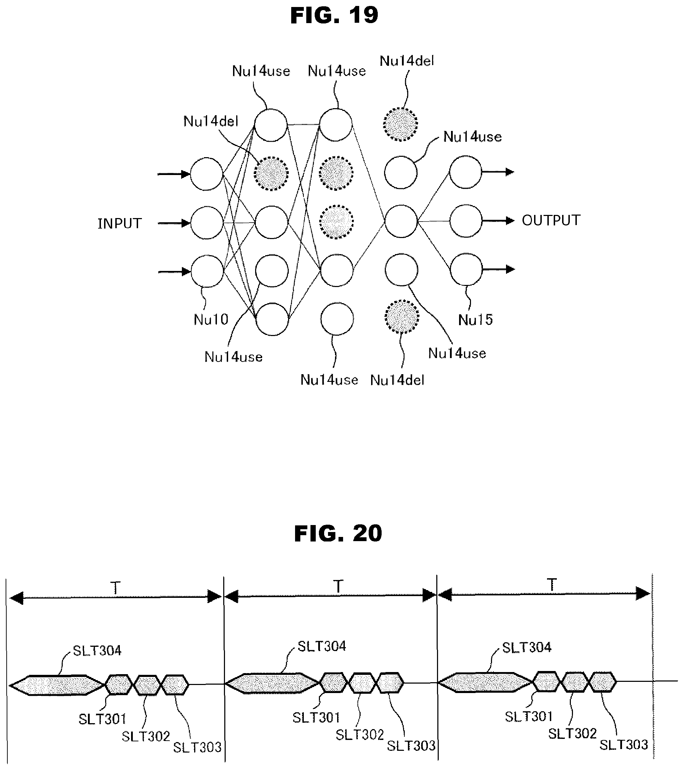

FIGs. 18 and 19 how recognition processing differs between a case of a large pruning ratio and a case of a small pruning ratio. The grey circles with broken lines in the drawing represent unused neurons. Neurons to be used are decided by appropriately selecting neurons suitable for the recognition processing.

FIG. 18 shows the case of a large pruning ratio, in which a number of unused neurons Nu14del is large with respect to a number of used neurons Nu14use. This reduces recognition accuracy while reducing computing load for neuro computing.

FIG. 19 shows the case of a small pruning ratio, in which the number of unused neurons Nu14del is small with respect to the number of used neurons Nu14use. This improves recognition accuracy while increasing computing load for neuro computing.

FIG. 20 shows a temporal relationship between processing cycle T and the processing slots, in which processing in processing slots SLT301 to SLT303 for the specific regions 301 to 303 low in processing priority is executed after execution of processing in processing slot SLT304 for specific region 304 high in processing priority. Processing slots SLT301 to SLT304 are executed within processing cycle T. This allows sufficient processing.

The above configuration allows reduction of computing load of neuro computing for specific regions low in processing priority, i.e., low in danger for collision, and thereby serves to perform safe travel assistance while effectively utilizing computer resources.

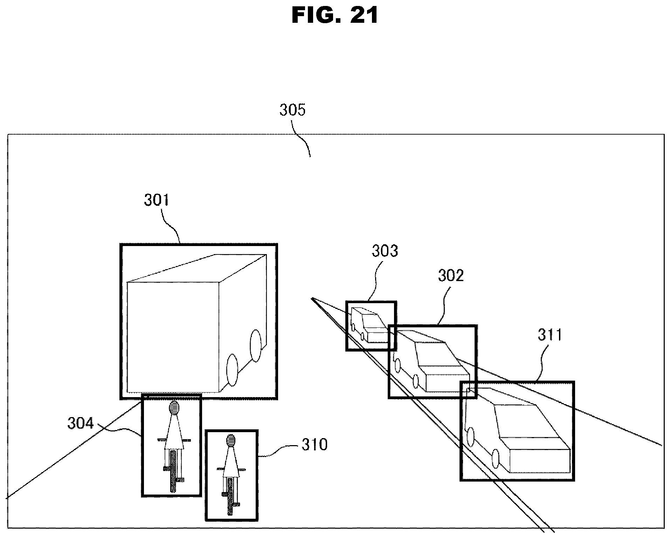

Next, the following describes a variation of the present embodiment. FIG. 21 additionally shows a specific region 310 including a new bicycle (a processing priority of which is "1") and a specific region 311 including a new oncoming vehicle (a processing priority of which is "0"). Thus, FIG. 21 is increased in number of the specific regions, and may undergo a problem of failing to complete processing of processing slots for all of the specific regions within processing cycle T.

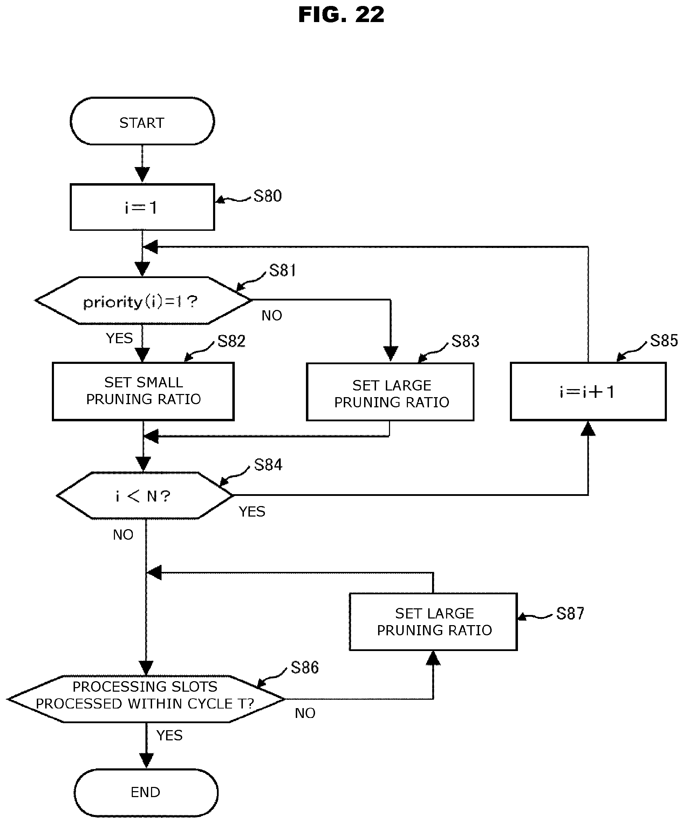

The present variation is configured to increase pruning ratios for images of the specific regions and thereby reduce processing loads of individual neuro computing processes, in order to complete processing of processing slots for all of the specific regions within processing cycle T. The following describes a control flow for performing this action, with reference to FIG. 22, in which explanations for control steps same with FIG. 17 are omitted.

### <Step S80> to <Step S85>

After setting the pruning ratios for all of the specific regions in steps S80 to S85, step S86 is executed.

### <Step S86>

Step S86 determines whether a total processing time of the processing slots of all of the specific regions is greater than processing cycle T, i.e., whether all of the processing slots can be processed within processing cycle T.

If determined that all of the processing slots can be processed within processing cycle T, the control flow exits to the end and is terminated. On the other hand, if determined that all of the processing slots cannot be processed within processing cycle T, step S87 is executed.

### <Step S87>

Step S87 updates the current pruning ratio to a larger value, and reduces the processing load of the neuro computing. Repetition of this process allows all of the processing slots to be processed within processing cycle T. Then, in step S86 again, if determined that all of the processing slots can be processed within processing cycle T, the control flow exits to the end and is terminated.

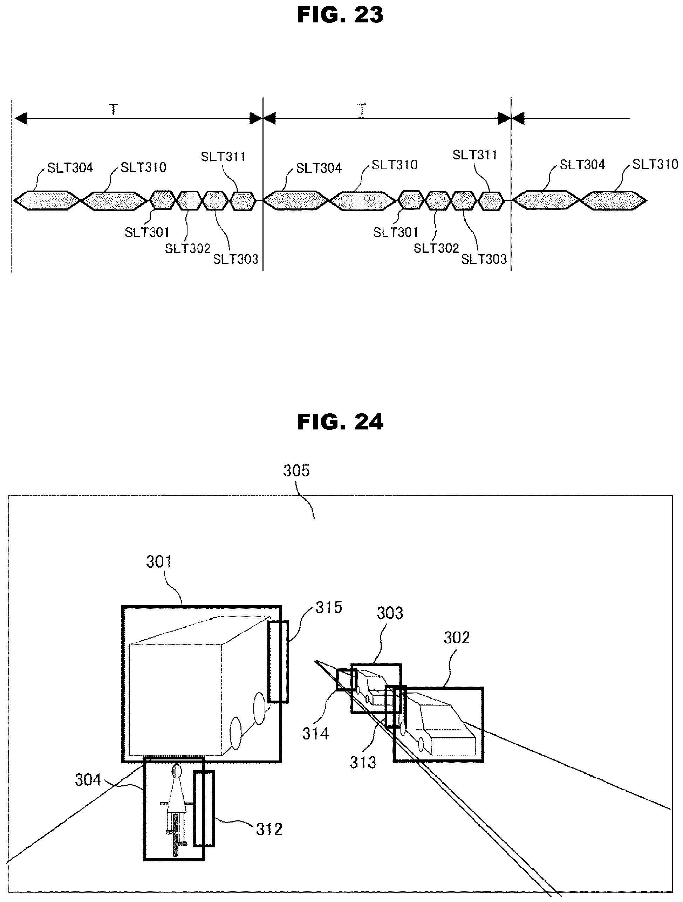

FIG. 23 shows a temporal relationship between processing cycle T and the processing slots, in which processing slots SLT304 and SLT310 of specific regions 304 and 310 set high in processing priority have been increased in pruning ratio and reduced in computing load of neuro computing, in comparison with processing slot SLT304 in FIG. 20.

Similarly, processing slots SLT301 to SLT303 and SLT 311 of specific regions 301 to 303 and 311 set low in processing priority have been increased in pruning ratio and reduced in computing load of neuro computing, in comparison with processing slot SLT301 to SLT303 in FIG. 20.

Even in case of increase in number of the specific regions, the pruning ratios of neuro computing of processing slots SLT301 to SLT304 and SLT310 to SLT311 are adjusted to increase within processing cycle T. In other words, the pruning ratios for the images of the specific regions are increased and the processing loads of neuro computing for the individual specific regions are reduced such that processing of the processing slots for all of the specific regions can be completed within processing cycle T.

### Fourth Embodiment

The first embodiment of the present invention is configured such that risk derivation section 15 determines a risk of collision with traffic participants captured by camera 20. Differently from this, the fourth embodiment is configured to derivate a risk even in case that a traffic participant exists in a space being a blind spot of an image.

For example, as shown in FIG. 24, it is predicted that a blind-spot region 312 exists behind specific region 304, and blind-spot regions 313 to 315 exist behind specific regions 301 to 303, wherein a traffic participant may exist in these blind-spot regions. Thus, the present embodiment derives risk also for the blind-spot regions.

Risk derivation section 15 determines a risk degree on whether a traffic participant assumed to exist in the blind-spot region extracted by region extraction section 14 is behaving in a manner dangerous for the own vehicle.

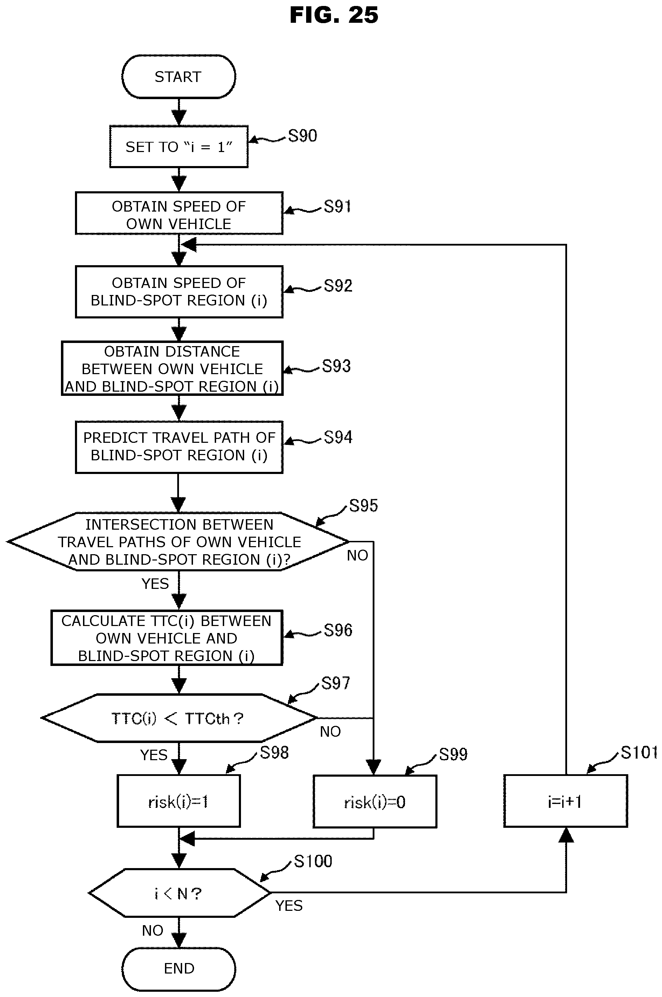

The following describes a control flow for determination of this risk degree, with reference to FIG. 25. A number of the blind-spot regions is N, while the number of the blind-spot regions is four in case of FIG. 4.

### <Step S90>

Step S90 sets "(i) = 1" to indicate that this is risk determination for the first specific region. This causes the risk degree in the first specific region to be determined. Subsequently to setting of (i) to "1", step S91 is executed.

### <Step S91>

Step S91 obtains the speed of the own vehicle. The speed of the own vehicle may be obtained from an output from the speed sensor of the own vehicle, or calculated from a change in the location signal of GPS section 21, wherein means for which is not limited. Subsequently to obtaining of the speed of the own vehicle, step S92 is executed.

### <Step S92>

Step S92 obtains the speed of the blind-spot region (i = 1). The speed of the blind-spot region (i = 1) can be calculated using a speed of the traffic participant in the specific region corresponding to the blind-spot region, which can be accordingly calculated from image information similarly to the first embodiment. A method for obtaining this speed is well known. In the following explanation, processing is implemented deeming the blind-spot region to be a traffic participant corresponding to this region. Subsequently to obtaining of the speed of the blind-spot region (i = 1), step S93 is executed.

### <Step S93>

Step S93 obtains a distance (i.e., an inter-vehicle distance) between the own vehicle and the blind-spot region (i = 1). The inter-vehicle distance can be obtained from image information, a method for which is well known. Subsequently to obtaining of the distance between the own vehicle and the blind-spot region (i = 1), step S94 is executed.

### <Step S94>

Step S90 predicts a travel path the blind-spot region (i = 1). The travel path can be predicted based on map information. In addition, road conditions such as road shapes, road regions, white lines, and traffic signs can be obtained from map information. Subsequently to prediction of the travel path of the blind-spot region (i = 1), step S95 is executed.

### <Step S95>

Step S95 determines whether there is an intersection between a travel path of the own vehicle and the travel path of the blind-spot region (i = 1) obtained in the control step described above, i.e., whether there is a risk of contact or collision. If determined that there is an intersection between the travel path of the own vehicle and the travel path of the blind-spot region (i = 1), step S96 is executed. If determined that determined that there is no intersection between the travel paths, step S99 is executed.

### <Step S96>

Step S96 calculates estimated contact time TTC (i = 1) between the blind-spot region (i = 1) and the own vehicle. Estimated contact time TTC (i = 1) may be calculated from a speed difference (i.e., relative speed) between the blind-spot region (i = 1) and the own vehicle and a distance between the blind-spot region (i = 1) and the own vehicle which have been obtained in the control steps above Subsequently to calculation of estimated contact time TTC (i = 1), step S97 is executed.

### <Step S97>

Step S97 determines whether estimated contact time TTC (i = 1) calculated in step S97 is shorter than predetermined estimated contact time threshold TTCth or not. If determined that estimated contact time TTC (i = 1) is shorter than predetermined estimated contact time threshold TTCth, the risk of contact or collision is deemed high, and step S98 is executed. If determined that estimated contact time TTC (i = 1) is longer than predetermined estimated contact time threshold TTCth, the risk of contact or collision is deemed low, and step S99 is executed.

### <Step S98>

Since step S97 has determined the risk of contact to be high, step S98 sets the risk degree to "risk(i) = 1" and then shifts to step S20. The "1" on the right-hand side represents a high risk. This sets blind-spot region (i = 1) to be deemed as a high-risk blind-spot region.

### <Step S99>

Since step S97 has determined no intersection to exist between the travel paths or has determined the risk of contact to be low, step S98 sets the risk degree to "risk(i) = 0" and then shifts to step S20. The "0" on the right-hand side represents a low risk. This sets the blind-spot region (i = 1) to be deemed as a low-risk blind-spot region.

### <Step S100>

Step S100 determines whether the current risk degree determination has been implemented for all of the N blind-spot regions. If determined that the current risk degree determination has been implemented for all of the N blind-spot regions, the flow is terminated.

If determined that the current risk degree determination has not been implemented for all of the N blind-spot regions, step S21 is executed because here the risk degree determination for the blind-spot region (i = 1) is being performed.

### <Step S101>

Step S101 sets (i) to "i + 1", and then returns to step S92 again and implements the risk degree determination for a second blind-spot region. Hereafter, the above control steps are executed until (i) reaches N.

In FIG. 24, it is assumed that bicycle 304 will move to the right side to avoid parked vehicle 201, and may collide with the own vehicle. Thus, blind-spot region 312 is determined to be a high-risk blind-spot region. Blind-spot regions 313 and 314 being oncoming vehicles would not affect travel of the own vehicle and have no risk of collision, and are accordingly determined to be low-risk blind-spot regions. This risk information is sent to priority setting section 16 and used similarly to the first embodiment.

### Fifth Embodiment

The first embodiment of the present invention is configured such that image information from sensor group 20 to 23 (e.g., camera 20 here) is inputted to region extraction section 14 for extraction of specific regions. The fifth embodiment is configured such that image information is inputted not only to region extraction section 14 but also to processing-load setting section 18.

Region extraction section 14, risk derivation section 15, and priority setting section 16 are similar to the first embodiment in functions thereof, explanations of which are omitted in the following.

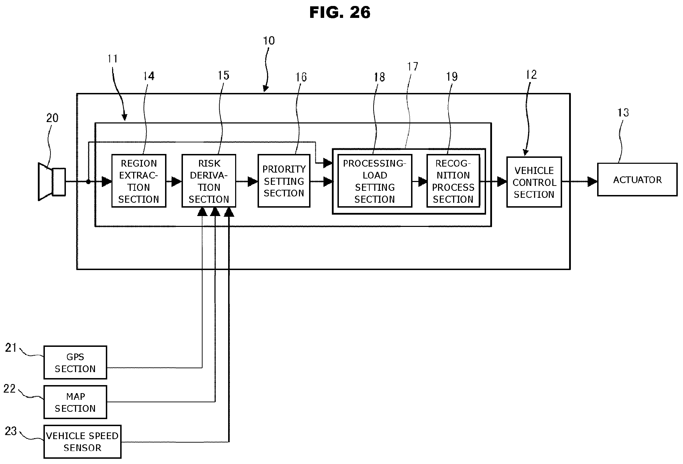

As shown in FIG. 26, the image information from camera 20 is inputted also to processing-load setting section 18 in addition to region extraction section 14, in parallel. The image information inputted to processing-load setting section 18 (i.e., an entire image of the front of the own vehicle) is low in processing priority, differently from the specific regions described above, and is accordingly downsized entirely and reduced in resolution.

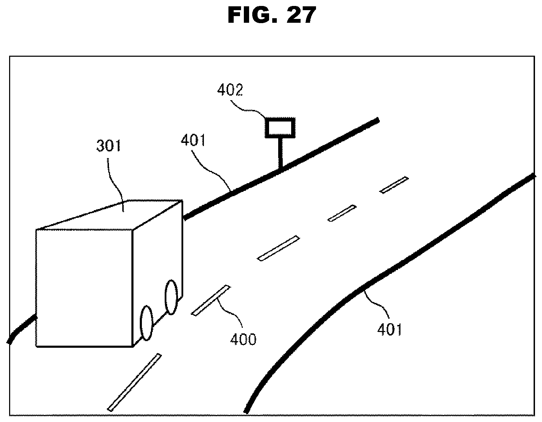

The downsized entire image such as one shown in FIG. 27 is inputted to recognition processing section 19. Then, recognition processing section 19 performs processes such as extraction of a white line 400 on a travel road, extraction of a road region 401, and extraction of a traffic sign 402.

Thus, recognition of information of a travel road not so large in risk for the vehicle is performed with use of a downsized entire image of the front of the own vehicle. This allows reduction of recognition processing section 19 in computing load, and thereby serves for safe travel assistance while effectively utilizing computing resources.

### Sixth Embodiment

The first embodiment of the present invention is configured to employ camera 20 as one of the sensor group, and input image information from camera 20 to region extraction section 14 for extract of specific regions. Differently from this, the sixth embodiment is configured to input signals from a laser distance sensor such as a LiDAR to region extraction section 14, while inputting images from camera 20 to recognition processing section 19.

Region extraction section 14, risk derivation section 15, and priority setting section 16 are similar to the first embodiment in functions thereof, explanations of which are omitted in the following.

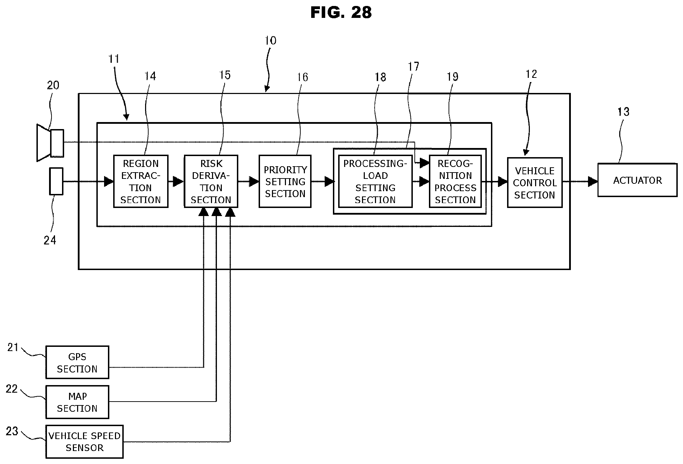

As shown in FIG. 28, point cloud information from LiDAR 24 is inputted to region extraction section 14, allows specification and extraction of region of traffic participants similarly to the first embodiment. The information from LiDAR 24 is advantageous for information processing because of being point cloud information, and serves for more accurate region extraction because being high in recognition accuracy of the traffic participants.

On the other hand, it is difficult for LiDAR 24 to determine color information such as white line information and traffic sign information. This is why the image information from camera 20 is inputted to recognition processing section 19. In this case, the image information from camera 20 serves for processes such as extraction of white line 400 on the travel road, extraction of road region 401, and extraction of traffic sign 402, in recognition processing section 19.

As described above, according to an aspect of the present invention, a travel assistance device includes: an information processing section configured to process information of sensor data obtained by a sensor; and a vehicle control section configured to perform travel assistance of a vehicle with use of the information processed by the information processing section. The information processing section includes: a region extraction section configured to extract a specific region containing a traffic participant around an own vehicle, from the information of the sensor data; a risk derivation section configured to derive a risk degree of the traffic participant of the extracted specific region in view of safe travel of the own vehicle; a priority setting section configured to set a processing priority of the specific region depending on the risk degree; a processing-load setting section configured to set a processing load of information of the traffic participant of the specific region depending on the processing priority; and a recognition processing section configured to perform recognition of the traffic participant, based on information of the processing load from the processing-load setting section.

The above aspect of the present invention serves to perform early recognition of danger (i.e., security of safety) and appropriate allotment of computing power, and thereby serves to perform safe travel assistance with effective utilization of computer resources.

The present invention is not limited to the embodiments described above, but includes various variations. For example, the vehicle may be a cargo carriage vehicle that travels in a factory. The traffic participants may be other cargo carriage vehicles, pedestrians walking in the factory, etc. Although the above embodiments describe details for understandability of explanation, the present invention is not limited to one including all elements shown in the embodiments. Furthermore, it is allowed to replace a partial configuration of any one of the embodiments with a configuration of another one of the embodiments, or add a configuration of any one of the embodiments to configurations of another one of the embodiments. It is allowed to perform addition, removal, and/or replacement of a configuration(s) in any one of the embodiments.

### Description of the Signs

10... travel assistance device, 11... information processing section, 12... vehicle control section, 13... actuator vehicle control device, 14... region extraction section, 15... risk derivation section, 16... priority setting section, 17... image recognition section, 18... processing-load setting section, 19... recognition processing section, 20... camera (sensor),

## Claims

1. A travel assistance device comprising:
an information processing section configured to process information of sensor data obtained by a sensor; and
a vehicle control section configured to perform travel assistance of a vehicle with use of the information processed by the information processing section,
wherein the information processing section includes:
a region extraction section configured to extract a specific region containing a traffic participant around an own vehicle, from the information of the sensor data;
a risk derivation section configured to derive a risk degree of the traffic participant of the extracted specific region in view of safe travel of the own vehicle;
a priority setting section configured to set a processing priority of the specific region depending on the risk degree;
a processing-load setting section configured to set a processing load of information of the traffic participant of the specific region depending on the processing priority; and
a recognition processing section configured to perform recognition of the traffic participant, based on information of the processing load from the processing-load setting section.

2. The travel assistance device as claimed in claim 1, wherein the priority setting section is configured to set the specific region as a high-risk specific region if the specific region is high in risk degree, and set the specific region as a low-risk specific region if the specific region is lower in risk degree than the high-risk specific region.

3. The travel assistance device as claimed in claim 2, wherein:
the sensor data is image information from a camera; and
the region extraction section is configured to extract the specific region containing the traffic participant around the own vehicle, from the image information.

4. The travel assistance device as claimed in claim 3, wherein the region extraction section is configured to extract the specific region from a single piece of the image information.

5. The travel assistance device as claimed in claim 4, wherein:
the region extraction section is configured to extract an entire region and the specific region existing in the entire region, from the image information; and
the priority setting section is configured to set the entire region to be low in processing priority than the specific region.

6. The travel assistance device as claimed in claim 1, wherein the risk derivation section is configured to derive the risk degree by predicting movement of a moving traffic participant from behavior of the moving traffic participant moving.

7. The travel assistance device as claimed in claim 6, wherein the risk derivation section is configured to derive the risk degree by predicting movement of the moving traffic participant from a non-moving traffic participant not moving, in addition to behavior of the moving traffic participant.

8. The travel assistance device as claimed in claim 6, wherein the risk derivation section is configured to:
estimate an estimated contact time that is a time until the moving traffic participant becomes an obstacle to safe travel of the own vehicle; and
derive the risk degree depending on the estimated contact time.

9. The travel assistance device as claimed in claim 8, wherein:
the estimated contact time estimated by the risk derivation section is an estimated contact time until the moving traffic participant contacts with the own vehicle; and
the risk degree is derived depending on the estimated contact time.

10. The travel assistance device as claimed in claim 9, wherein the risk derivation section is configured to estimate the estimated contact time with use of a size, a travel direction, a travel speed, and a travel acceleration of the moving traffic participant.

11. The travel assistance device as claimed in claim 7, wherein:
the non-moving traffic participant is an obstacle around the moving traffic participant or a road condition; and
the risk derivation section is configured to derive the risk degree by predicting behavior of the moving traffic participant from the obstacle or the road condition and predicting movement of the moving traffic participant.

12. The travel assistance device as claimed in claim 1, wherein the vehicle control section is configured to detect a dangerous travel situation, based on a statistical value with reference to the risk degree of the risk derivation section, and correct a control output in order to escape from the dangerous travel situation.

13. The travel assistance device as claimed in claim 1, wherein the vehicle control section is configured to detect a dangerous travel situation, based on a statistical value with reference to the risk degree of the risk derivation section, and notify a warning.

14. The travel assistance device as claimed in claim 2, wherein the priority setting section is configured to set the high-risk specific region to be high in image resolution in comparison with a case of being not the high-risk specific region, depending on the processing priority.

15. The travel assistance device as claimed in claim 2, wherein the priority setting section is configured to set the high-risk specific region to be higher in image resolution than the low-risk specific region, depending on the processing priority.

16. The travel assistance device as claimed in claim 2, wherein the priority setting section is configured to set the high-risk specific region to be short in computing processing cycle in comparison with a case of being not the high-risk specific region, depending on the processing priority.

17. The travel assistance device as claimed in claim 2, wherein the priority setting section is configured to set the high-risk specific region to be shorter in computing processing cycle than the low-risk specific region, depending on the processing priority.

18. The travel assistance device as claimed in claim 2, wherein:
an image of the specific region is image-recognized with use of a convolutional neural network; and
the processing-load setting section is configured to set the high-risk specific region to be small in pruning ratio of the convolutional neural network in comparison with a region being not the specific region, depending on the processing priority.

19. The travel assistance device as claimed in claim 2, wherein the processing-load setting section is configured to set the pruning ratio of the convolutional neural network such that a total processing time of the specific region and the region being not the specific region is equal to or less than a target processing time.

20. The travel assistance device as claimed in claim 1, wherein:
the region extraction section is configured to extract a blind-spot region from image information of the sensor data; and
the risk derivation section is configured to estimate an estimated contact time being a time until the blind-spot region becomes an obstacle to safe travel of the own vehicle, and derive the risk degree depending on the estimated contact time.

21. The travel assistance device as claimed in claim 1, wherein:
the sensor includes a laser distance sensor and a camera;
point cloud information from the laser distance sensor is inputted to the region extraction section; and
image information from the camera is inputted to the recognition processing section.

22. A travel assistance method for a travel assistance device including: an information processing section configured to process information of sensor data obtained by a sensor; and a vehicle control section configured to perform travel assistance of a vehicle with use of the information processed by the information processing section, the travel assistance method comprising:
configuring the information processing section to:
extract a specific region containing a traffic participant around an own vehicle, from the information of the sensor data;
derive a risk degree of the traffic participant of the extracted specific region in view of safe travel of the own vehicle;
set a processing priority of the specific region depending on the risk degree;
set a processing load of information of the traffic participant of the specific region depending on the processing priority; and
perform recognition of the traffic participant, based on information of the processing load from the processing-load setting section.
